# EUROPEAN PATENT APPLICATION

(11) **EP 4 502 224 A1**
(43) Date of publication of application: **05.02.2025**
(21) Application number: 23778119.0
(22) Date of filing: 27.03.2023
(51) Int. Cl.: C23C 2/12

(54) **HOT-STAMPED COMPONENT HAVING HIGH COLD-BENDING PERFORMANCE AND HIGH STRENGTH, AND MANUFACTURING METHOD THEREFOR**

(30) Priority: 28.03.2022 CN 202210311710
(71) Applicant: BAOSHAN IRON & STEEL CO., LTD., Shanghai 201900 (CN)
(72) Inventor: TAN, Ning, Shanghai 201900 (CN); LIU, Hao, Shanghai 201900 (CN); JIN, Xinyan, Shanghai 201900 (CN); MA, Xuedan, Shanghai 201900 (CN)
(74) Representative: Kuhnen & Wacker Patent- und Rechtsanwaltsbüro PartG mbB
(86) International application number: PCT/CN2023/084138
(87) International publication number: WO 2023/185754

(57) **Abstract**

Disclosed in the present invention are a hot-stamped component having high cold-bending performance and high strength, and a manufacturing method therefor. The method comprises: (1) manufacturing a steel plate for hot stamping; (2) preprocessing a component; (3) heat treatment, transfer and stamping of the component: placing a semi-finished product of the component into a heat treatment furnace, controlling a heat treatment temperature to be 750°C-960°C, and controlling the total time of heat treatment to be 1.5-10 min and the time for the heat treatment temperature above 880°C not to be less than 1.2 min; transferring the heat-treated semi-finished product into a mold for mold-closed stamping, and the temperature of the semi-finished product when leaving the heat treatment furnace not being lower than 900°C; when the thickness of the steel plate forming the component is less than or equal to 1.5 mm, controlling transfer time to be 11 s - 20 s, and when the thickness of the steel plate forming the component is greater than 1.5 mm, controlling the transfer time to be 13 s - 25 s; and (4) stamping posttreatment: performing thermal insulation homogenization on the component, then performing machining to obtain a finished product. Accordingly, a component having a product of strength and elongation of ≥10 Gpa·%, a cold-bending angle of ≥60 degrees, and a three-point bending maximum load of ≥13 KN can be prepared by using the method.

## Description

### Technical Field

The present disclosure relates to a method for manufacturing a high-strength component, and in particular to a hot-stamped component with high cold-bending performance and high strength, and a method for manufacturing the same.

### Background Art

In recent years, along with the rapid development of the automotive industry, the market and users impose higher and higher requirements on vehicles, and lightweighting has gradually become a development trend of the automotive industry in the future.

Nowadays, in order to meet the requirement with respect to vehicle lightweighting, hot stamped steel is often used to make automotive structural parts and safety parts. Hot stamped steel can both achieve vehicle lightweighting and improve vehicle safety. 1500 MPa grade hot stamped steel has been widely used in the automotive industry, and 1800 MPa hot stamped steel and 2000 MPa hot stamped steel have also been put into use one after another.

However, research has revealed that the higher the strength of hot stamped steel having a fully martensitic structure, the lower the toughness of the steel, and the higher the risk of brittle fracture during collision and delayed cracking during service. This problem directly leads to the fact that it is difficult for current hot stamped steel to acquire both high strength and good toughness.

In order to solve this problem, a large number of scientific and technological workers have made many beneficial attempts in recent years:
Chinese Patent Publication CN110799659A, published on February 14, 2020 and titled "METHOD FOR PRODUCING HIGH-STRENGTH STEEL COMPONENT WITH IMPROVED DUCTILITY AND COMPONENT OBTAINED BY SAME", discloses a method for producing a high-strength steel component with improved ductility and a component made by the method, which method mainly controls the Ni content and its distribution, and controls the Ni content in the matrix to be higher than 0.25% to obtain a high-strength steel component with good ductility.
Chinese Patent Publication CN106399837A, published on February 15, 2017 and titled "STEEL FOR HOT STAMPING, HOT STAMPING PROCESS AND HOT-STAMPED MEMBER", discloses a fine-grained hot stamping steel. According to the technical solution disclosed thereby, the fine-grained steel for hot stamping is obtained mainly by adding V element to the matrix. It also discloses the hot stamping process. During the hot stamping process in this technical solution, it is necessary to control the mold surface temperature to be 200°C or less, and control the cooling rate of the steel in the mold to be no less than 10°C/s.
Chinese Patent Publication CN111876676A, published on November 3, 2020 and titled "METHOD FOR PRODUCING 1800MPA-GRADE COLD-ROLLED STEEL FOR HOT STAMPING", discloses a method for producing a 1800MPa-grade cold-rolled steel for hot stamping. According to the technical solution disclosed thereby, a 1800MPa-grade hot stamped steel is obtained under the conditions that the cost is controlled at a low level, and no trace element is added. However, the toughness of the hot stamped steel, especially the cold bending performance, is insufficient.
Chinese Patent Publication CN101583486A, published on November 18, 2009 and titled "COATED STEEL STRIP, METHOD FOR PREPARING SAME, METHOD FOR USING SAME, STAMPING BLANK PREPARED THEREFROM, STAMPED PRODUCT PREPARED THEREFROM AND ARTICLE CONTAINING SUCH STAMPED PRODUCT", reports a method for hot stamping a coated steel, which method limits the duration from the point when the blank exits the heat treatment furnace to the start of stamping to no more than 10 seconds, and controls the cooling rate of the blank to be greater than 50°C/s during the time from the point when the blank exits the furnace to the point when its temperature reaches 400°C. However, the technical solution does not involve any study on the toughness of the material.
Chinese Patent Publication CN108588612A, published on September 28, 2018 and titled "HOT-STAMPED MEMBER, PRE-COATED STEEL SHEET FOR HOT STAMPING AND HOT STAMPING PROCESS", discloses a pre-coated hot stamped steel and a method for hot stamping the same. In the technical solution disclosed thereby, it's mentioned that the temperature of the steel sheet is 550°C or higher when it's transferred to the mold and it comes to the problem of low cold bending performance existing in Chinese Patent CN101583486B. According to this patent application, the cold bending problem is alleviated by reducing the coating thickness.

As it can be seen, in the current prior art, little research has been done by those skilled in the art on high-strength hot stamped steel with good cold bending performance. Among the above patent applications, only Chinese Patent Publication CN110799659A involves study on the cold bending performance of the material while it's guaranteed that the hot stamped steel has high strength.

Research has revealed that the larger the cold bending angle of hot stamped steel, the more energy it can absorb under the same conditions. Thus, the fracture failure time can be postponed. Therefore, the present inventors believe that it is particularly important to study the cold bending performance of high-strength hot stamped steel and a feasible method for producing the same. In view of the above, the present disclosure is intended to provide a method for producing a high-strength hot-stamped component having high cold bending performance.

### Summary

One of the objects of the present disclosure is to provide a method for producing a high-strength hot-stamped component having high cold bending performance. The method is simple and feasible, and can effectively produce a high-strength hot-stamped component having high cold bending performance. It has good promotion prospects and application effects.

In order to achieve the above object, the present disclosure provides a method for producing a high-strength hot-stamped component having high cold bending performance, comprising:
(1) Manufacture of a steel sheet for hot stamping;
(2) Component pre-processing;
(3) Heat treatment, transfer and stamping of the component: Placing a semi-finished component processed into a specified shape in a heat treatment furnace, and controlling a heat treatment temperature to be 750-960°C and a total heat treatment time to be 1.5-10 min, wherein a period of time during which the heat treatment temperature is 880°C or higher is no less than 1.2 min; transferring the semi-finished component that has experienced the heat treatment to a mold, closing the mold and performing stamping, wherein the semi-finished component has a temperature of ≥900°C when it exits the heat treatment furnace; wherein if a steel sheet thickness of the component thus obtained is ≤1.5 mm, a transfer time is controlled to be 11-20 s, and if the steel sheet thickness of the component thus obtained is >1.5 mm, the transfer time is controlled to be 13-25 s;
(4) Post-stamping processing: Homogenizing the component by soaking, followed by mechanical processing to obtain the finished product.

The present inventors have optimized the design of the heat treatment, transfer and stamping process of the component in step (3) in the above technical solution of the present disclosure. Heat treatment, transfer and stamping are particularly important to the performances of the component described in the present disclosure. These three elements are complementary to each other. The heat treatment process is very critical to the forming of the component; the transfer is very critical to the cold bending and strength of the component; and the stamping is very important to the forming and strength of the component.

The temperature and time of the heat treatment process may be adjusted flexibly according to the thickness specification and size of the component, mainly to guarantee complete austenitization and surface characteristics. The optimized transfer process is the core of the technical solution of the present disclosure. In the past, in order to guarantee high strength of a hot-formed component, the transfer process was required to be as fast as possible, and it was basically completed within 10 seconds. However, the present inventors have discovered by research that the transfer time can be controlled within an appropriate range in light of the turning point of the phase transition temperature of the substrate of the steel sheet for hot stamping, thereby ensuring high strength and improving the cold bending performance.

In the specific implementation of the present disclosure, the heat treatment temperature within the above-mentioned temperature range of 750-960°C may include different temperature sections at different stages, or it may be just a temperature range at a single stage. The heat treatment temperature may increase or decrease freely, or may be a combination thereof. The total heat treatment time needs to be controlled between 1.5 minutes and 10 minutes, and the heat treatment temperature is controlled to be 880°C or higher for no less than 1.2 minutes. The temperature of the semi-finished product leaving the heat treatment furnace is ≥900°C (e.g., between 900 and 960°C); otherwise, incomplete austenitization will be resulted, thereby affecting the strength-elongation product. The heat treatment time refers to the total time at all heat treatment temperatures.

Accordingly, in step (4) described in the present disclosure, the post-stamping processing can further eliminate the residual stress generated in the forming process, solve the problems of uneven structure and hydrogen diffusion, and thus further improve the cold bending performance of the component.

In the present disclosure, the manufacture of step (1) may be implemented with a conventional manufacturing process in the art. For example, it includes steelmaking, hot rolling, cold rolling, annealing and other process steps to obtain a substrate strip steel according to the required elements. The resulting substrate strip steel may be used directly as a steel sheet for hot stamping, or the substrate strip steel may be further plated and then used as a steel sheet for hot stamping. The plated coating may be an aluminum-silicon coating, an aluminum-silicon-zinc-magnesium coating, an aluminum-silicon-magnesium coating, a zinc coating or a zinc-iron alloy coating. Steel sheets having the above-mentioned various types of coatings plated on the surfaces of the substrate steel strips may be formed by methods well known in the art.

For example, a steel sheet having an aluminum-silicon coating on its surface is prepared by immersing a substrate strip steel into a plating solution containing 7-10% by mass of Si, 2-4% by mass of Fe, and a balance of Al and unavoidable impurities at 630-680°C. A steel sheet having a zinc-iron alloy coating on its surface is prepared by immersing a substrate strip steel into a plating solution containing 8-12% by mass of Zn, 2-4% by mass of Fe, and a balance of Al and unavoidable impurities at 420-700° C. A steel sheet having an aluminum-silicon-magnesium coating on its surface is prepared by immersing a substrate strip steel into a plating solution containing 6-10% by mass of Si, 0.5-3% by mass of Mg, and a balance of Al and unavoidable impurities at 630-700° C. A steel sheet having a zinc coating on its surface is prepared by immersing a substrate strip steel into a plating solution containing 0.08-0.3% by mass of Al and a balance of Zn and unavoidable impurities at 420-700° C. A steel sheet having an aluminum-silicon-zinc-magnesium coating on its surface is prepared by immersing a substrate strip steel into a plating solution containing 6-10% by mass of Si, 0.5-2% by mass of Mg, 8-12% by mass of Zn, and a balance of Al and unavoidable impurities at 420-700° C.

In the present disclosure, the component pre-processing in step (2) provides the component with a desired shape. Depending on the desired shape of the component, the component is provided with the desired shape by one-step or multi-step laser processing or shearing, or by combining two or more steel sheets of different shapes and different thicknesses through tailor welding, patch welding or the like to complete the component pre-processing. Of course, the component pre-processing process described in the present disclosure is not limited to the operations stated herein, and in some other embodiments, it may further include similar or equivalent operations.

In addition, it should be noted that if a tailor-welded component or a patch-welded component is obtained in step (2), and if one thickness is 1.5 mm or less and another thickness is 1.5 mm or more, both thicknesses need to be taken into account to determine the transfer time of the component. For example, 13 to 20 seconds may be selected.

Further, in the method for producing a high-strength hot-stamped component having high cold bending performance according to the present disclosure, the steel sheet for hot stamping includes at least one of uncoated steel sheet, aluminum-silicon coated steel sheet, aluminum-silicon-zinc-magnesium coated steel sheet, aluminum-silicon-magnesium coated steel sheet, hot-dip galvanized steel sheet, and zinc-iron alloy coated steel sheet.

Further, in the method for producing a high-strength hot-stamped component having high cold bending performance according to the present disclosure, the chemical composition of the substrate of the steel sheet for hot stamping is: C: 0.2-0.4%, Mn: 1.0-2.0%, Si: 0.1-0.5%, Al: 0.01-0.1%, Ti: 0.01-0.1%, B: 0.0005-0.01%, Cr: 0.1-0.5%, and Nb+Mo+Ni: 0.3-0.6%, based on mass percentage, wherein the mass percentage of any one of Nb, Mo, and Ni does not exceed 0.3%.

In the substrate of the steel sheet for hot stamping according to the present disclosure, the chemical elements are designed according to the following principles:
C: In the present disclosure, the addition of an appropriate amount of C element into the substrate can guarantee the strength of the steel, so as to guarantee the strength of the hot-stamped component. Therefore, the content of C element in the steel should not be too low. If the content of C element in the steel is lower than 0.2%, the strength cannot be guaranteed. At the same time, the content of C element in the steel should not be too high. If the content of C element in the steel is higher than 0.4%, the strength will be too high, such that the welding performance of the steel will be degraded. Hence, with the performance of the substrate taken into account, the mass percentage of C element in the substrate of the present disclosure is controlled at 0.2-0.4%.
Mn: In the substrate of the present disclosure, like C element, Mn element is also added to guarantee the strength of the hot-stamped component. Meanwhile, Mn element can further make up the toughness of the substrate steel. If the content of Mn element in the steel is lower than 1.0%, the strength of the steel cannot be guaranteed; if the content of Mn element in the steel is higher than 2.0%, both element segregation and production cost will increase. Hence, in order to exploit the beneficial effect of Mn element, the mass percentage of Mn element in the substrate of the present disclosure is controlled at 1.0% - 2.0%.
Si: In the present disclosure, the addition of an appropriate amount of Si element into the substrate can increase the strength of the hot-stamped component, and it's also an important deoxygenation agent in the steelmaking process. If the content of Si element in the steel is too high, severe oxidation will occur during the production process, making it difficult to guarantee good product surface quality. Therefore, in the substrate of the present disclosure, the mass percentage of Si element is controlled at 0.1 - 0.5%.
Al: In the substrate of the present disclosure, Al element is also a deoxygenation agent. The addition of an appropriate amount of Al element can also improve the impact toughness of the steel. Therefore, with the influence of Al element on the performances of the steel taken into account, the mass percentage of Al element in the substrate of the present disclosure is controlled at 0.01-0.1%.
B: The addition of an appropriate amount of B element into the substrate of the present disclosure can improve the hardenability of the steel to ensure that the hot-stamped component is fully hardened everywhere. Therefore, in the substrate of the present disclosure, the mass percentage of B element is controlled at 0.0005 - 0.01%.
Ti: In the substrate of the present disclosure, Ti is a strengthening element of C and N. The addition of an appropriate amount of Ti element into the steel can improve the strength and toughness of the substrate, thereby further improving the strength and toughness of the hot-stamped component. At the same time, Ti element can also interact with B element, so that better use of B can be made to improve hardenability. Hence, in order to exploit the beneficial effect of Ti element, the mass percentage of Ti element in the substrate of the present disclosure is controlled at 0.01 - 0.1%.
Cr: The addition of an appropriate amount of Cr element into the substrate of the present disclosure can also improve the hardenability of the steel, and ensure that the hot-stamped component is fully hardened everywhere. Therefore, in the substrate of the present disclosure, the mass percentage of Cr element is controlled at 0.1 - 0.5%.

It should be noted that, appropriate amounts of Nb, Mo, and Ni elements are further added into the substrate of the present disclosure. Nb and Mo elements can both play a role in refining grains and improving the toughness of the hot-stamped component. Ni element can also play a role in improving the toughness of the hot-stamped component, and Ni also promotes hydrogen diffusion. Therefore, in the substrate of the present disclosure, the mass percentage of Nb, Mo, and Ni elements is controlled to meet: Nb+Mo+Ni: 0.3-0.6%. The mass percentage of any one of Nb, Mo and Ni does not exceed 0.3%. In some embodiments, the mass percentage of Nb is 0.0001% - 0.25%. In some embodiments, the mass percentage of Mo is 0.1% - 0.25%. In some embodiments, the mass percentage of Ni is 0.05% - 0.25%, such as 0.08% - 0.2%.

Further, in the method for producing a high-strength hot-stamped component having high cold bending performance according to the present disclosure, in step (3), the total heat treatment time is controlled to be 1.5 - 8 minutes.

Further, in the method for producing a high-strength hot-stamped component having high cold bending performance according to the present disclosure, in step (3), the stamping speed is controlled to be 40 - 80 mm/s, and held for 2 - 30 seconds.

Further, in the method for producing a high-strength hot-stamped component having high cold bending performance according to the present disclosure, in step (3), the mold temperature is always lower than 200° C during the stamping process. In some embodiments, during the stamping process, the mold temperature is in the range of 25-190°C.

Further, in the method for producing a high-strength hot-stamped component having high cold bending performance according to the present disclosure, in step (4), homogenization by soaking is performed at a temperature of 150-250°C for 10-30 minutes.

Further, in the method for producing a high-strength hot-stamped component having high cold bending performance according to the present disclosure, in step (4), the mechanical processing includes at least one of cutting, trimming, punching, and welding.

Further, in the method for producing a high-strength hot-stamped component having high cold bending performance according to the present disclosure, in step (3), a martensitic structure is formed in the component at a volume ratio of 95% or higher.

The method of the present disclosure can be used to prepare a high-strength hot-stamped component having high cold bending performance with a strength-elongation product of ≥10 GPa·% and a cold bending angle of ≥60 degrees. Preferably, the maximum three-point bending load of the high-strength hot-stamped component is ≥13KN. In some embodiments, the high-strength hot-stamped component prepared according to the method of the present disclosure has a tensile strength of ≥1500 MPa and an elongation after fracture of ≥5.5%. In some embodiments, the high-strength hot-stamped component prepared according to the method of the present disclosure has a tensile strength of 1500-1700 MPa, an elongation after fracture of 6.0-7.0%, and a strength-elongation product of ≥10 GPa·%. In some embodiments, the high-strength hot-stamped component prepared according to the method of the present disclosure has a tensile strength of 1800 - 2100 MPa, an elongation after fracture of 5.5 - 6.0%, and a strength-elongation product of ≥10.5 GPa·%.

Therefore, another object of the present disclosure is to provide a high-strength hot-stamped component. The high-strength hot-stamped component has both high strength and high cold bending performance. It has a wide range of applicability and can be effectively used in the automotive industry. It exhibits good resistance to head-on and side collisions during car collision.

In order to achieve the above object, the present disclosure provides a high-strength hot-stamped component having a strength-elongation product of ≥10 GPa·%, and a cold bending angle of ≥60 degrees. In some embodiments, the maximum three-point bending load of the high-strength hot-stamped component is ≥13 KN. In some embodiments, the high-strength hot-stamped component of the present disclosure has a strength-elongation product of 10-12 GPa·%, a cold bending angle of 60-75 degrees, and a maximum three-point bending load of 13-20 KN. In some embodiments, the content of diffusible hydrogen in the high-strength hot-stamped component of the present disclosure is 0.01-0.06 ppm. In some embodiments, the high-strength hot-stamped component has a tensile strength of ≥1500 MPa and an elongation after fracture of ≥5.5%. In some embodiments, the high-strength hot-stamped component has a tensile strength of 1500-1700 MPa, an elongation after fracture of 6.0-7.0%, and a strength-elongation product of ≥10 GPa·%. In some embodiments, the high-strength hot-stamped component has a tensile strength of 1800 - 2100 MPa, an elongation after fracture of 5.5 - 6.0%, and a strength-elongation product of ≥10.5 GPa·%. In some embodiments, the hot-stamped component is made by the method described in any embodiment of the present disclosure.

Compared with the prior art, the method for producing a high-strength hot-stamped component having high cold bending performance and the hot-stamped component according to the present disclosure have the following advantages and beneficial effects:
In the present disclosure, the present inventors have reasonably optimized the design of the method for manufacturing the high-strength hot-stamped component. By optimizing the control of the three processes of heat treatment, transfer and stamping, it can be ensured that the component has high strength while also having good toughness and cold bending performance.

In the method for producing the high-strength hot-stamped component having high cold bending performance according to the present disclosure, 95% or higher of martensitic structure is formed in the component during the heat treatment and stamping process, so that the component is able to acquire high strength. At the same time, during the precisely controlled transfer of the component, the present disclosure makes full use of the difference in cooling between the skin and the core, and a gradient control of structural transformation in the skin of the component is achieved. This is very helpful in improving the toughness and cold bending performance of the component.

The performances of the high-strength hot-stamped component prepared by the above method of the present disclosure are quite excellent. It has a strength-elongation product of ≥10GPa·%, a cold bending angle of ≥60 degrees, and preferably a maximum three-point bending load of ≥13KN. The high-strength hot-stamped component has a wide range of applicability and can be effectively used in the automotive industry. It exhibits good resistance to head-on and side collisions during car collision.

### Description of the Drawing

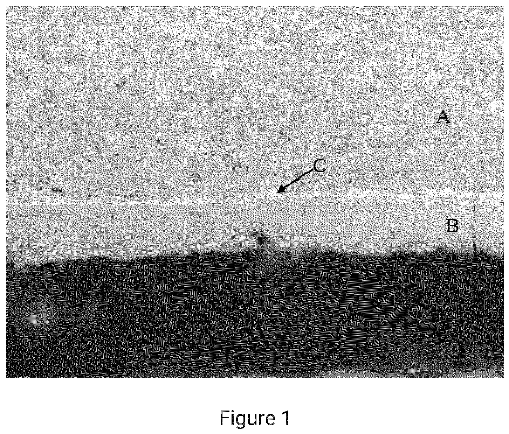

Figure 1 is a photograph showing the microstructure of the cross section of the coating of the high-strength hot-stamped component according to Example 2.

### Detailed Description

The method for producing a high-strength hot-stamped component having high cold bending performance and the hot-stamped component according to the present disclosure will be further explained and illustrated with reference to the following specific examples. However, such explanation and illustration do not limit the technical solution of the present disclosure in any improper way.

### Examples 1-9

Table 1 lists the mass percentages of the various chemical elements in the substrates of the steel sheets for hot stamping in Examples 1-9 and the relationship between the chemical elements.

**Table 1 (wt%, the balance being Fe and unavoidable impurities)**

| No. | Chemical elements | | | | | | | | | | Nb+Mo+Ni |
|---|---|---|---|---|---|---|---|---|---|---|---|
| | C | Si | Mn | Al | Ti | B | Cr | Nb | Mo | Ni | |
| Ex. 1 | 0.35 | 0.20 | 1.2 | 0.05 | 0.01 | 0.002 | 0.2 | 0.04 | 0.18 | 0.08 | 0.3 |
| Ex. 2 | 0.22 | 0.1 | 1.0 | 0.01 | 0.03 | 0.0005 | 0.1 | 0.0001 | 0.2 | 0.1 | 0.3001 |
| Ex. 3 | 0.25 | 0.23 | 1.19 | 0.1 | 0.03 | 0.001 | 0.2 | 0.005 | 0.25 | 0.2 | 0.455 |
| Ex. 4 | 0.30 | 0.36 | 2.0 | 0.07 | 0.05 | 0.003 | 0.3 | 0.01 | 0.1 | 0.2 | 0.31 |
| Ex. 5 | 0.38 | 0.25 | 1.5 | 0.03 | 0.05 | 0.002 | 0.5 | 0.05 | 0.2 | 0.2 | 0.45 |
| Ex. 6 | 0.35 | 0.40 | 1.30 | 0.05 | 0.09 | 0.004 | 0.3 | 0.1 | 0.25 | 0.2 | 0.55 |
| Ex. 7 | 0.37 | 0.5 | 1.4 | 0.08 | 0.01 | 0.01 | 0.4 | 0.25 | 0.15 | 0.2 | 0.6 |
| Ex. 8 | 0.30 | 0.30 | 1.70 | 0.08 | 0.03 | 0.005 | 0.3 | 0.05 | 0.24 | 0.2 | 0.49 |
| Ex. 9 | 0.4 | 0.36 | 1.20 | 0.07 | 0.05 | 0.006 | 0.3 | 0.04 | 0.15 | 0.15 | 0.34 |

In the present disclosure, the high-strength hot-stamped components of Examples 1-9 were each prepared by the following steps:
(1) A substrate strip steel was manufactured by steelmaking, hot rolling, cold rolling, annealing and other process steps based on the mass percentages of the various chemical elements shown in Table 1. The resulting substrate strip steel could be used directly as a steel sheet for hot stamping, or the substrate strip steel could be further plated and then used as a steel sheet for hot stamping.
(2) Component pre-processing: Depending on the desired component shape, blanking could be accomplished by one-step or multi-step laser processing or shearing, or by combining two or more steel sheets of different shapes and different thicknesses through tailor welding, patch welding, etc.
(3) Heat treatment, transfer and stamping of the component: A semi-finished component processed into a specified shape was placed in a heat treatment furnace. The heat treatment temperature was controlled to be 750-960°C; the total heat treatment time was controlled to be 1.5-10 min, preferably 1.5-8 min; and the period of time during which the heat treatment temperature was 880°C or higher was no less than 1.2 min. The semi-finished component that had experienced the heat treatment was transferred to a mold. The mold was closed, and stamping was performed. The semi-finished component had a temperature of no less than 900°C when it exited the heat treatment furnace. The upper and lower parts of the mold were joined together with the use of a press. The stamping speed was controlled to be 40-80 mm/s, and held for 2-30 seconds. During the stamping process, the mold temperature was always below 200°C. If the steel sheet thickness of the resulting component was ≤1.5 mm, the transfer time was controlled to be 11-20 s, and if the steel sheet thickness of the resulting component was >1.5 mm, the transfer time was controlled to be 13-25 s.
(4) Post-stamping processing: The component was soaked and homogenized. The temperature of homogenization by soaking was controlled to be 150-250°C for 10-30 minutes, and then mechanical processing was performed to obtain a finished product. The mechanical processing included cutting, trimming, punching, and welding.

It should be noted that in step (1) of the above manufacturing method, the hot stamped steel sheet could be an uncoated steel sheet or a coated steel sheet. When the hot stamped steel sheet was a coated steel sheet, it could specifically be: aluminum-silicon coated steel sheet, aluminum-silicon-zinc-magnesium coated steel sheet, aluminum-silicon-magnesium coated steel sheet, hot-dip galvanized steel sheet, or zinc-iron alloy coated steel sheet.

In the present disclosure, the specific process steps in the above steps (1) and (2) of Examples 1-9 are as follows:
Example 1: A 1.2 mm substrate strip steel was obtained by steelmaking, hot rolling, cold rolling and annealing based on the mass percentages of the various chemical elements shown in Table 1. The 1.2 mm substrate strip steel was hot dipped with aluminum and silicon at 650°C to obtain an aluminum-silicon coated steel sheet, wherein the composition of the plating solution was 9% Si, 2.3% Fe, and a balance of Al and unavoidable impurities. In the component pre-processing step, the aluminum-silicon coated steel sheet was continuously blanked into a component of a certain shape.
Example 2: A 1.5 mm substrate strip steel and a 1.8 mm substrate strip steel were obtained by steelmaking, hot rolling, cold rolling and annealing based on the mass percentages of the various chemical elements shown in Table 1. The 1.5 mm substrate strip steel and the 1.8 mm substrate strip steel were hot dipped with aluminum and silicon at 650°C to obtain aluminum-silicon coated steel sheets, wherein the composition of the plating solution was 9% Si, 2.3% Fe, and a balance of Al and unavoidable impurities. In the component pre-processing step, the aluminum-silicon coated steel sheets were laser blanked into components of a certain shape, and the two components were connected by tailor welding to obtain a component of a certain shape.
Example 3: A 1.8 mm substrate strip steel was obtained by steelmaking, hot rolling, cold rolling and annealing based on the mass percentages of the various chemical elements shown in Table 1. The 1.8 mm substrate strip steel was hot dipped with aluminum and silicon at 660°C to obtain an aluminum-silicon coated steel sheet, wherein the composition of the plating solution was 8.5% Si, 2.5% Fe, and a balance of Al and unavoidable impurities. In the component pre-processing step, the aluminum-silicon coated steel sheet was continuously blanked into a billet of a certain shape, and a patch was made at a local position of the billet by spot welding (patch welding was performed with two 1.8 mm thick substrates) to obtain a component of a certain shape.
Example 4: A 2.0 mm substrate strip steel was obtained by steelmaking, hot rolling, cold rolling and annealing based on the mass percentages of the various chemical elements shown in Table 1, and the substrate strip steel was used as a steel sheet for hot stamping. In the component pre-processing step, the steel sheet was continuously blanked into a billet of a certain shape.
Example 5: A 2.3 mm substrate strip steel was obtained by steelmaking, hot rolling, cold rolling and annealing based on the mass percentages of the various chemical elements shown in Table 1, and the substrate strip steel was used as a steel sheet for hot stamping. In the component pre-processing step, the steel sheet was continuously blanked into a billet of a certain shape.
Example 6: A 1.4 mm substrate strip steel was obtained by steelmaking, hot rolling, cold rolling and annealing based on the mass percentages of the various chemical elements shown in Table 1. The 1.4 mm substrate strip steel was subjected to hot-dip galvanization and alloying at 680°C to obtain a zinc-iron alloy coated steel sheet, wherein the composition of the plating solution was 9% Zn, 2.3% Fe, and a balance of Al and unavoidable impurities. In the component pre-processing step, the zinc-iron alloy coated steel sheet was laser blanked into a billet of a certain shape.
Example 7: A 2.5 mm substrate strip steel was obtained by steelmaking, hot rolling, cold rolling and annealing based on the mass percentages of the various chemical elements shown in Table 1. The 2.5 mm substrate strip steel was hot dipped with aluminum, silicon and magnesium at 680°C to obtain an aluminum-silicon-magnesium coated steel sheet, wherein the composition of the plating solution was 8.5% Si, 1% Mg, and a balance of Al and unavoidable impurities. In the component pre-processing step, the aluminum-silicon-magnesium coated steel sheet was laser blanked into a billet of a certain shape.
Example 8: A 0.9 mm substrate strip steel was obtained by steelmaking, hot rolling, cold rolling and annealing based on the mass percentages of the various chemical elements shown in Table 1. The 0.9 mm substrate strip steel was hot dipped at 680°C to obtain a hot-dip galvanized steel sheet, wherein the composition of the plating solution was 0.13% Al and a balance of Zn and unavoidable impurities. In the component pre-processing step, the hot-dip galvanized steel sheet was laser blanked into a billet of a certain shape.
Example 9: A 3.0 mm substrate strip steel was obtained by steelmaking, hot rolling, cold rolling and annealing based on the mass percentages of the various chemical elements shown in Table 1. The 3.0 mm substrate strip steel was hot dipped at 680°C to obtain an aluminum-silicon-zinc-magnesium coated steel sheet, wherein the composition of the plating solution was 8.5% Si, 1% Mg, 10%Zn, and a balance of Al and unavoidable impurities. In the component pre-processing step, the aluminum-silicon-zinc-magnesium coated steel sheet was laser blanked into a billet of a certain shape, and the billet was heat treated.

It should be noted that, in the present disclosure, the design of the chemical compositions of the hot stamped steel sheets for the high-strength hot-stamped components of Examples 1-9 and the related processes all meet the requirements of the design specification according to the present disclosure.

Table 2-1 and Table 2-2 list the relevant process parameters of the method for manufacturing the high-strength hot-stamped components of Examples 1-9.

**Table 2-1**

| No. | Step (1) | | Step (2) | Step (3) | | | |
|---|---|---|---|---|---|---|---|
| | Strip steel thickness (mm) | Coating | Pre-processin 9 | Heat treatment temperature (°C) | Total heat treatment time (min) | Time during which the heat treatment temperature is 880°C or higher (min) | Temperature of the semi-finished product when it leaves the heat treatment furnace (°C) |
| Ex. 1 | 1.2 | Aluminum-silicon coating | Blanking | 780-930 | 3 | 1.5 | 900 |
| Ex. 2 | 1.5, 1.8 | Aluminum-silicon coating | Blanking, tailor welding | 800-940 | 4 | 2 | 940 |
| Ex. 3 | 1.8 | Aluminum-silicon coating | Blanking, patch welding | 850-950 | 5 | 4 | 950 |
| Ex. 4 | 2.0 | No coating | Blanking | 900-930 | 4 | 4 | 930 |
| Ex. 5 | 2.3 | No coating | Blanking | 900-960 | 5 | 5 | 950 |
| Ex. 6 | 1.4 | Zinc-iron alloy | Blanking | 900-930 | 3 | 3 | 920 |
| Ex. 7 | 2.5 | Aluminum-silicon-ma gnesium coating | Blanking | 800-930 | 6 | 5 | 930 |
| Ex. 8 | 0.9 | Hot-dip galvanized coating | Blanking | 780-900 | 1.5 | 1.2 | 900 |
| Ex. 9 | 3.0 | Aluminum-silicon-zin c-magnesi um coating | Blanking | 750-930 | 10 | 6 | 930 |

**Table 2-2**

| No. | Step (3) | | | | Step (4) | |
|---|---|---|---|---|---|---|
| | Transfer time (s) | Stamping speed (mm/s) | Pressure hold time (s) | Mold temperature during stamping (°C) | Soaking temperature (°C) | Soaking time (min) |
| Ex. 1 | 15 | 40 | 10 | 100 | 200 | 20 |
| Ex. 2 | 15 | 50 | 16 | 25 | 230 | 15 |
| Ex. 3 | 20 | 60 | 15 | 150 | 250 | 20 |
| Ex. 4 | 23 | 60 | 12 | 160 | 170 | 25 |
| Ex. 5 | 20 | 80 | 10 | 190 | 220 | 20 |
| Ex. 6 | 20 | 70 | 8 | 150 | 250 | 10 |
| Ex. 7 | 18 | 60 | 15 | 160 | 200 | 15 |
| Ex. 8 | 11 | 60 | 2 | 100 | 150 | 30 |
| Ex. 9 | 25 | 50 | 30 | 160 | 200 | 20 |

It should be made clear that in Table 2-1 in the present disclosure, the heat treatment temperatures for the heat treatment process in step (3) in Examples 1-9 are all numerical ranges rather than single-point values. This is because the heat treatment furnace is usually characterized by segmented control. The temperature of each segment can be controlled separately, and the temperature of each segment can be different from that of another segment. The range of the heat treatment temperature described in the present disclosure depends on the distribution range of all temperatures in all segments.

In addition, it should be noted that when the above-mentioned manufacturing process was implemented in Examples 1 to 9, after the components of Examples 1 to 9 were heat treated, transferred and stamped according to the design requirements in step (3), the components of Examples 1 to 9 could be sampled, and the microstructure of the component of each Example could be examined to obtain the volume ratio of martensitic structure in each component of Examples 1 to 9. The relevant test results are listed in Table 3 below. The percentage of martensite in a component was measured by metallography: after the sample was mounted, it was mechanically ground, polished and etched, and the collected image was processed by a metallographic image analysis software to obtain the percentage of martensitic structure.

**Table 3**

| No. | Volume ratio of martensitic structure (%) |
|---|---|
| Ex. 1 | 95 |
| Ex. 2 | 96 |
| Ex. 3 | 97 |
| Ex. 4 | 95 |
| Ex. 5 | 97 |
| Ex. 6 | 98 |
| Ex. 7 | 96 |
| Ex. 8 | 99 |
| Ex. 9 | 96 |

As the finished products of Examples 1-9 finally obtained through the above process steps, the high-strength hot-stamped components were each sampled, and various performances were tested on the sample of each Example. The results of the performance testing are listed in Table 4 below.

The performance testing processes used in the present disclosure are as follows:
(1) Strength-elongation product: Strength-elongation product is a comprehensive performance indicator that characterizes the level of strength and toughness of a metal material. The product of tensile strength and elongation after fracture of a component is used in the present disclosure to provide the strength-elongation product of the sample of each Example. The tensile strength and elongation after fracture of the component were obtained through the tensile testing according to GB/T228.1 "Metallic materials Tensile testing".
(2) Cold bending testing: Cold bending testing was performed according to Standard VDA-238 to obtain the cold bending angles of the samples of Examples 1-9. A larger cold bending angle indicates better toughness of a material; and a smaller cold bending angle indicates lower toughness of a material.
(3) Three-point bending testing and drop hammer testing: Three-point bending testing and drop hammer testing were performed by placing the hot-stamped component of an Example on a bending device, adjusting the span, and applying a load to the component for bending testing until the component fractured. The maximum load at which the component fractured was recorded. In the drop hammer testing, a 30 kg drop hammer was allowed to drop from a height of 50 cm in the form of free fall, and the cracking of the sample component of each Example was observed.
(4) Measurement of diffusible hydrogen content: A sample was obtained from a component by wire cutting, punching or sawing with water cooling, and ultrasonically cleaned with acetone. The diffusible hydrogen content in the sample of each Example was measured at 300-400°C using a hydrogen analyzer.

Table 4 lists the relevant performance testing results of the high-strength hot-stamped component samples of Examples 1-9.

**Table 4**

| No. | Strength-elongation product (GPa·%) | Tensile strength (MPa) | Elongation after fracture (%) | Cold bending angle (°) | Maximum three-point bending load (KN)* | Drop hammer testing * | Hydrogen content testing (ppm) |
|---|---|---|---|---|---|---|---|
| Ex. 1 | 10.8 | 1700 | 6.4 | 65 | 15 | No cracking | 0.05 |
| Ex. 2 | 10 | 1500 | 6.7 | 60 | / | / | 0.01 |
| Ex. 3 | 10.1 | 1600 | 6.3 | 60 | / | / | 0.02 |
| Ex. 4 | 11.4 | 1900 | 6 | 70 | 18 | No cracking | 0.03 |
| Ex. 5 | 11 | 2000 | 5.5 | 75 | 17 | No cracking | 0.04 |
| Ex. 6 | 10.6 | 1850 | 5.7 | 60 | 14 | No cracking | 0.05 |
| Ex. 7 | 12 | 2100 | 5.7 | 60 | 20 | No cracking | 0.06 |
| Ex. 8 | 10.5 | 1700 | 6.2 | 60 | 13 | No cracking | 0.03 |
| Ex. 9 | 11.8 | 2000 | 5.9 | 60 | 15 | No cracking | 0.04 |

| | | | | | | | |
|---|---|---|---|---|---|---|---|
| Note: * indicates that the drop hammer testing was conducted using the high-strength hot-stamped components of Examples 1-9 as anti-collision beam parts. | | | | | | | |

It should be noted that, since Example 2 was a tailor welded component and Example 3 was a patch welded component, they both involved weld seams. Due to the influence of the weld seams, it's not appropriate to use the drop hammer testing for evaluation. At the same time, due to the influence of the weld seams, it's also not appropriate to use the maximum load testing for evaluation. Therefore, Examples 2 and 3 were not subjected to three-point bending testing or drop hammer testing.

It can be seen from Table 4 that the high-strength hot-stamped components of Examples 1-9 exhibited high strength as well as excellent toughness and cold bending performance. In the present disclosure, the strength-elongation product of the high-strength hot-stamped components of Examples 1-9 was 10-12 GPa·%; the cold bending angle was 60-75 degrees; and the maximum three-point bending load was 13-20 KN.

Accordingly, as further shown by Table 4, when the high-strength hot-stamped components of Examples 1-9 as anti-collision beam components were subjected to drop hammer testing, none of the high-strength hot-stamped components of Examples 1-9 cracked, indicating excellent strength-elongation product and toughness. At the same time, the diffusible hydrogen content of the high-strength hot-stamped components of Examples 1-9 was 0.01 - 0.06 ppm, indicating good resistance to hydrogen embrittlement.

Figure 1 is a photograph showing the microstructure of the cross section of the coating of the high-strength hot-stamped component according to Example 2.

As shown by Figure 1, in the high-strength hot-stamped component of Example 2, Example 2 had an aluminum-silicon coating layer, including a substrate A and a coating layer B. There was an apparent interface layer C between the coating layer A and the substrate B.

It should be noted that the combinations of the various technical features in the present case are not limited to the combinations described in the claims in the present case or the combinations described in the specific Examples. All technical features recorded in the present case can be combined freely in any way unless a contradiction is incurred.

It should also be noted that the Examples listed above are only specific embodiments of the present disclosure. Obviously, the present disclosure is not limited to the above Examples. Variations or modifications made based on them can be directly derived or easily conceived of from the present disclosure by those skilled in the art, and they should all fall within the protection scope of the present disclosure.

## Claims

1. A method for producing a high-strength hot-stamped component having high cold bending performance, comprising:
(1) Manufacturing a steel sheet for hot stamping;
(2) Component pre-processing;
(3) Heat treatment, transfer and stamping of the component: Placing a semi-finished component processed into a specified shape in a heat treatment furnace, and controlling a heat treatment temperature to be 750-960°C and a total heat treatment time to be 1.5-10 min, wherein a period of time during which the heat treatment temperature is 880°C or higher is no less than 1.2 min; transferring the semi-finished component that has experienced the heat treatment to a mold, closing the mold and performing stamping, wherein the semi-finished component has a temperature of ≥900°C when it exits the heat treatment furnace; wherein if a steel sheet thickness of the component thus obtained is ≤1.5 mm, a transfer time is controlled to be 11-20 s, and if the steel sheet thickness of the component thus obtained is >1.5 mm, the transfer time is controlled to be 13-25 s;
(4) Post-stamping processing: Homogenizing the component by soaking, followed by mechanical processing to obtain the finished product.

2. The method for producing a high-strength hot-stamped component having high cold bending performance according to claim 1, wherein the steel sheet for hot stamping includes at least one of uncoated steel sheet, aluminum-silicon coated steel sheet, aluminum-silicon-zinc-magnesium coated steel sheet, aluminum-silicon-magnesium coated steel sheet, hot-dip galvanized steel sheet, and zinc-iron alloy coated steel sheet.

3. The method for producing a high-strength hot-stamped component having high cold bending performance according to claim 1, wherein a chemical composition of a substrate of the steel sheet for hot stamping is: C: 0.2-0.4%, Mn: 1.0-2.0%, Si: 0.1-0.5%, Al: 0.01-0.1%, Ti: 0.01-0.1%, B: 0.0005-0.01%, Cr: 0.1-0.5%, and Nb+Mo+Ni: 0.3-0.6%, based on mass percentage, wherein the mass percentage of any one of Nb, Mo, and Ni does not exceed 0.3%; preferably, a mass percentage of Nb is 0.0001% - 0.25%; a mass percentage of Mo is 0.1% - 0.25%; a mass percentage of Ni is 0.05% - 0.25%, such as 0.08% - 0.2%.

4. The method for producing a high-strength hot-stamped component having high cold bending performance according to claim 1, wherein in step (3), the total heat treatment time is controlled to be 1.5 - 8 minutes.

5. The method for producing a high-strength hot-stamped component having high cold bending performance according to claim 1, wherein in step (3), a stamping speed is controlled to be 40 - 80 mm/s, and held for 2 - 30 seconds.

6. The method for producing a high-strength hot-stamped component having high cold bending performance according to claim 1 or 5, wherein in step (3), a mold temperature is always lower than 200°C during the stamping.

7. The method for producing a high-strength hot-stamped component having high cold bending performance according to claim 1, wherein in step (4), homogenization by soaking is performed at a temperature of 150-250°C for 10-30 minutes.

8. The method for producing a high-strength hot-stamped component having high cold bending performance according to claim 1, wherein in step (4), the mechanical processing includes at least one of cutting, trimming, punching, and welding.

9. The method for producing a high-strength hot-stamped component having high cold bending performance according to claim 1, wherein in step (3), a martensitic structure is formed in the component at a volume ratio of 95% or higher.

10. The method for producing a high-strength hot-stamped component having high cold bending performance according to claim 1, wherein the hot-stamped component has a strength-elongation product of ≥10 GPa·% and a cold bending angle of ≥60 degrees; preferably, the hot-stamped component has a maximum three-point bending load of ≥13KN; preferably, the hot-stamped component has a tensile strength of ≥1500 MPa; and preferably, the hot-stamped component has an elongation after fracture of ≥5.5%.

11. A hot-stamped component manufactured according to the method of any one of claims 1-10.

12. A hot-stamped component, wherein a chemical composition of a substrate of the hot-stamped component is: C: 0.2-0.4%, Mn: 1.0-2.0%, Si: 0.1-0.5%, Al: 0.01-0.1%, Ti: 0.01-0.1%, B: 0.0005-0.01%, Cr: 0.1-0.5%, and Nb+Mo+Ni: 0.3-0.6%, based on mass percentage, wherein the mass percentage of any one of Nb, Mo, and Ni does not exceed 0.3%, wherein the hot-stamped component has a strength-elongation product of ≥10 GPa·% and a cold bending angle of ≥60 degrees.

13. The hot-stamped component according to claim 12, wherein a mass percentage of Nb is 0.0001% - 0.25%; a mass percentage of Mo is 0.1% - 0.25%; and a mass percentage of Ni is 0.05% - 0.25%, such as 0.08% - 0.2%.

14. The hot-stamped component according to claim 12 or 13, wherein the hot-stamped component further has a coating on its surface; preferably, the coating is selected from aluminum-silicon coating, aluminum-silicon-zinc-magnesium coating, aluminum-silicon-magnesium coating, hot-dip galvanized coating and zinc-iron alloy coating.

15. The hot-stamped component according to claim 12, 13 or 14, wherein the hot-stamped component has a maximum three-point bending load of ≥13 KN; and/or the hot-stamped component has a diffusible hydrogen content of 0.01-0.06 ppm; and/or the hot-stamped component has a tensile strength of ≥1500 MPa; and/or the hot-stamped component has an elongation after fracture of ≥5.5%.
